(19) Europäisches Patentamt
European Patent Office
Office européen des brevets

(11) **EP 1 914 214 A1**

(12) **EUROPEAN PATENT APPLICATION**
published in accordance with Art. 153(4) EPC

(43) Date of publication:
**23.04.2008 Bulletin 2008/17**

(51) Int Cl.:
**C04B 35/626** (2006.01)     **C04B 35/581** (2006.01)

(21) Application number: **06757349.3**

(22) Date of filing: **15.06.2006**

(86) International application number:
**PCT/JP2006/312051**

(87) International publication number:
**WO 2006/135016 (21.12.2006 Gazette 2006/51)**

(84) Designated Contracting States:
**DE FR GB IT NL**

(30) Priority: **15.06.2005 JP 2005175586**

(71) Applicant: **Tokuyama Corporation**
**Shunan-shi, Yamaguchi-ken 745-8648 (JP)**

(72) Inventors:
• **UMEKAWA, Hideki,**
**c/o TOKUYAMA CORPORATION**
**Shunan-shi,**
**Yamaguchi 745-8648 (JP)**

• **AZUMA, Masanobu,**
**c/o TOKUYAMA CORPORATION**
**Shunan-shi,**
**Yamaguchi 745-8648 (JP)**

(74) Representative: **Matthews, Derek Peter**
**Frank B. Dehn & Co.**
**St Bride's House**
**10 Salisbury Square**
**London EC4Y 8JD (GB)**

(54) **ALUMINUM NITRIDE SINTER, SLURRY, GREEN OBJECT, AND DEGREASED OBJECT**

(57)     It is an object to provide an aluminum nitride sinter having a high fracture toughness and being excellent in mechanical strength and thermal conductivity, and materials for the sinter.

The aluminum nitride sinter comprises aluminum nitride crystal grains and a grain boundary phase derived from a sintering aid. In any cross section in a surface region extending up to 100 $\mu$m from the surface of the sinter, the proportion of the area of a grain boundary phase having a circumscribed circle diameter of 1 $\mu$m or less to the total area of the grain boundary phase is at least 50%, and the average grain diameter of the aluminum nitride crystal grains is in the range of 3.0 to 7.0 $\mu$m. This aluminum nitride sinter can be produced from an aluminum nitride slurry having a specific grain size distribution, an aluminum nitride green object having a specific submerged density, or an aluminum nitride degreased object having a specific pore diameter.

Fig. 3

**Description**

TECHNICAL FIELD

The present invention relates to an aluminum nitride sinter, and an aluminum nitride slurry, an aluminum nitride green object, and an aluminum nitride degreased object that are used for the production of the aluminum nitride sinter.

BACKGROUND ART

Aluminum nitride has a high thermal conductivity and is excellent in an insulation property. Consequently, the sinter thereof is used for many kinds of applications such as a substrate like a semiconductor mounting substrate and a member of a semiconductor manufacturing apparatus.

In particular, for a semiconductor mounting substrate, heat generation in driving a semiconductor device is increased corresponding to a higher output of a semiconductor device to be mounted. As a countermeasure to the heat generation, a thin film made of copper or the like is bonded to the substrate, or a heat sink member such as a radiating fin made of a metal is bonded to the substrate in many cases. Consequently, in the application of a semiconductor mounting substrate, a substrate material is used under the environments in which more kinds of stresses can be applied to the substrate material as compared with conventional cases, and a substrate material having a higher fracture toughness is required.

As an aluminum nitride sinter having an improved fracture toughness, there is known, for instance, an aluminum nitride sinter having an enlarged grain size distribution in which two kinds of aluminum nitride powders having different grain size distributions are used as materials (see Patent documents 1 and 2). Moreover, an aluminum nitride sinter in which non-uniform distortion of the YAG ($3Y_2O_3 \cdot 5Al_2O_3$) phase has a specific value or larger is also known (see Patent document 3).

For the methods disclosed in Patent documents 1 and 2, an aluminum nitride powder having an average grain diameter in the range of 0.5 to 3 $\mu$m and an aluminum nitride powder having an average grain diameter in the range of 3 to 15 $\mu$m are used as a material. However, of the two kinds of aluminum nitride powders, the aluminum nitride powder having an average grain diameter in the range of 3 to 15 $\mu$m is produced by a direct nitriding method that has a deteriorated sintering property in general. Consequently, a complicated process and a precise control of a sintering temperature are required to uniformly sinter the aluminum nitride powder. Moreover, a fracture toughness and a mechanical strength of the aluminum nitride sinter obtained by the methods should be improved in a well balanced manner.

The sinter in disclosed in Patent document 3 has a high strength. However, the sinter still has a room for improvement to make a fracture toughness, a thermal conductivity, and a mechanical strength to be improved in a well balanced manner.

Patent document 1: Japanese Patent Application Laid-Open Publication No. 2001-2474
Patent document 2: Japanese Patent Application Laid-Open Publication No. 2002-220283
Patent document 3: Japanese Patent Application Laid-Open Publication No. 10-203873

DISCLOSURE OF THE INVENTION

PROBLEMS TO BE SOLVED BY THE INVENTION

An object of the present invention is to provide an aluminum nitride sinter having a high fracture toughness and being improved in a fracture toughness, a thermal conductivity, and a mechanical strength in a well balanced manner. Another object of the present invention is to provide an aluminum nitride slurry, a green object, and a degreased object that are used as a material of the aluminum nitride sinter.

MEANS FOR SOLVING THE PROBLEMS

The inventors have found that a grain boundary phase derived from a sintering aid has a specific structure and the average grain diameter of the aluminum nitride grains is in the specific range in a region extending up to 100 $\mu$m from the surface of the sinter, thereby obtaining an aluminum nitride sinter, having a high fracture toughness and being improved in a fracture toughness, a thermal conductivity, and a mechanical strength in a well balanced manner, and that the sinter can be produced from the specific aluminum nitride slurry, green object, and degreased object, and have proposed the present invention.

The aluminum nitride sinter in accordance with the present invention is characterized by comprising:

aluminum nitride crystal grains; and
a grain boundary phase derived from a sintering aid;

wherein, in any cross section in a region extending up to 100 $\mu$m from the surface of the sinter, the proportion of the area of a grain boundary phase having a circumscribed circle diameter of 1$\mu$ m or less to the total area of the grain boundary phase is at least 50%, and the average grain diameter of the aluminum nitride grains is in the range of 3.0 to 7.0 $\mu$m.

By the present invention, the sinter can be obtained by using as a material an aluminum nitride slurry comprising:

an aluminum nitride powder, a sintering aid, a binding agent, and an organic solvent having an average grain diameter in the range of 1.0 to 3.0 $\mu$m;

wherein a cumulative 50% value (D50) in a grain size distribution curve is in the range of 0.8 to 1.2 $\mu$m, and a ratio of a cumulative 90% value and a cumulative 10% value (D90/D10) is in the range of 6.0 to 6.8.

Moreover, by the present invention, the sinter can be obtained by using an aluminum nitride green object comprising:

an aluminum nitride powder and a binding agent having an average grain diameter in the range of 1.0 to 3.0 $\mu$m;

wherein a submerged density is in the range of 2.25 to 2.45 g/cm$^3$.

Furthermore, by the present invention, the sinter can be obtained by using an aluminum nitride degreased object wherein the maximum peak point of a pore distribution measured by a mercury porosimeter is in the range of 0.18 to 0.28 $\mu$m.

EFFECT OF THE INVENTION

An aluminum nitride sinter in accordance with the present invention has a high fracture toughness and is improved in a fracture toughness, a thermal conductivity, and a mechanical strength in a well balanced manner. The aluminum nitride sinter can be produced from an aluminum nitride slurry, an aluminum nitride green object, and an aluminum nitride degreased object in accordance with the present invention.

BRIEF DESCRIPTION OF THE DRAWINGS

Fig. 1 is a view showing a region extending up to 100 $\mu$m from a surface of a sinter in the case in which a shape of a sinter sample is a rectangular parallelepiped. A part from a surface of the cross section to a dotted line is the region extending up to 100 $\mu$m from a surface of the sinter.
Fig. 2 is a view showing a region extending up to 100 $\mu$m from a surface of a sinter in the case in which a shape of a sinter sample is a circular cylinder. A part from a surface of the cross section to a dotted line is the region extending up to 100 $\mu$m from a surface of the sinter.
Fig. 3 is a view showing a pore distribution of an aluminum nitride degreased object that has been obtained in Embodiment 1.

BEST MODE OF CARRYING OUT THE INVENTION

[Aluminum nitride sinter]

At first, a structure of an aluminum nitride sinter to be obtained by the present invention will be described below.

<Grain boundary phase of the sinter>

The aluminum nitride sinter in accordance with the present invention is produced by using at least an aluminum nitride powder and a sintering aid as a material. A grain boundary phase derived from the sintering aid is formed in at least a part of a grain boundary of the aluminum nitride sinter.
Sintering aids capable of forming the above grain boundary phase include compounds that is generally used, for instance, rare earth compounds such as yttrium oxide ($Y_2O_3$), lanthanum oxide ($LaO_3$), cerium oxide ($CeO_3$), holmium oxide ($HoO_3$), ytterbium oxide ($Yb_2O_3$), gadolinium oxide ($Gd_2O_3$), neodymium oxide ($NdO_3$), samarium oxide ($Sm_2O_3$),

and dysprosium oxide ($Dy_2O_3$), and alkali earth metal compounds such as calcium oxide (CaO), magnesium oxide (MgO), and strontium oxide (SrO), and a mixture of the compounds. Among those sintering aids, yttrium oxide ($Y_2O_3$) is preferable from a view point of that a sinter to be obtained is precise and has a high thermal conductivity.

As a sintering aid, it is preferable to use a sintering aid of which residue rate in the sinter is at least 40%, more preferably at least 50%. Here, a residue rate of a sintering aid in a sinter is obtained from a value of (the sintering aid derived component contained in the sinter after sintering) / (the sintering aid contained in a green object before sintering). In the case in which a sintering aid having the above residue rate is used, a grain boundary phase derived from a sintering aid has a specific structure and the average grain diameter of the aluminum nitride grains is in the specific range in a region extending up to 100 μm from the surface of the sinter, thereby obtaining an aluminum nitride sinter having a high fracture toughness and being improved in a fracture toughness, a thermal conductivity, and a mechanical strength in a well balanced manner.

As a sintering aid of which residue rate in the sinter is at least 40%, there are mentioned, for instance, rare earth compounds such as yttrium oxide ($Y_2O_3$), lanthanum oxide ($LaO_3$), cerium oxide ($CeO_3$), holmium oxide ($HoO_3$), ytterbium oxide ($Yb_2O_3$), gadolinium oxide ($Gd_2O_3$), neodymium oxide ($NdO_3$), samarium oxide ($Sm_2O_3$), and dysprosium oxide ($Dy_2O_3$), and alkali earth metal compounds such as calcium oxide (CaO), magnesium oxide (MgO), and strontium oxide (SrO), and a mixture thereof.

In the present invention, a grain boundary phase derived from a sintering aid means a phase formed independently from a sintering aid, a phase formed by a reaction of a plurality of sintering aids, and a phase formed by a reaction of a sintering aid and an impurity of aluminum nitride in a grain boundary of aluminum nitride crystal grains.

For instance, in the case in which yttrium oxide is used as a sintering aid, yttrium oxide reacts to impurity oxygen contained in an aluminum nitride material powder to form a grain boundary phase having a composition such as $3Y_2O_3 \cdot 5Al_2O_3$ (hereafter also referred to as YAG), $Y_2O_3 \cdot Al_2O_3$ (hereafter also referred to as YAL), and $2Y_2O_3 \cdot Al_2O_3$ (hereafter also referred to as YAM).

In particular, in the case in which an aluminum nitride powder that has been produced by a reduction nitriding method is used as an aluminum nitride powder, a grain boundary phase having a composition rich in YAM can be easily formed, thereby displaying an excellent thermal conductivity.

In the aluminum nitride sinter in accordance with the present invention, a grain boundary phase derived from a sintering aid has a specific structure in a region extending up to 100 μm from the surface of the sinter. More specifically, in the sinter in accordance with the present invention, the proportion of the area of a grain boundary phase having a circumscribed circle diameter of 1 μm or less to the total area of the grain boundary phase is at least 50% in any cross section in a region extending up to 100 μm from the surface of the sinter.

A region extending up to 100 μm from the surface of the sinter means the following region. That is, in the case in which any cross section including the surface of the sinter is selected, a tangent line that is circumscribed to a curve of the surface of the sinter is drawn at any point included in the cross section for the surface of the sinter, and a straight line A perpendicular to the tangent line is drawn, a region of the straight line A extending up to 100 μm from the point of the surface of the sinter in an internal direction of the sinter is the above region extending up to 100 μm from the surface of the sinter.

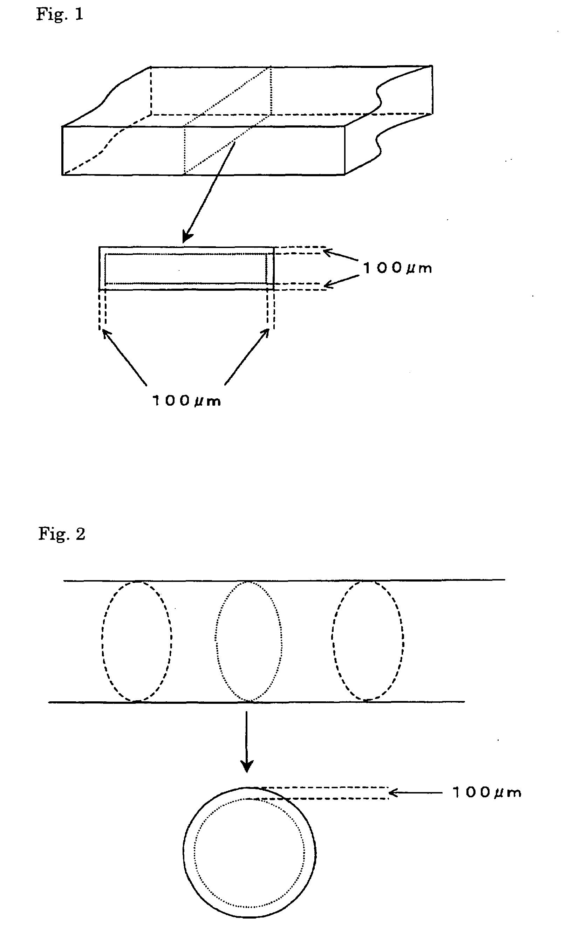

Figs. 1 and 2 illustrate the cases in which a shape of the sinter is a rectangular parallelepiped and a circular cylinder, respectively.

A diameter of a circumscribed circle of the grain boundary phase can be obtained by the following process. A sinter sample obtained by the present invention is broken. The structures around the surface of the sinter are almost equivalent to each other. Consequently, a direction of a broken plane is not restricted in particular, and any direction can be adopted. In general, the sinter sample is broken at a plane almost perpendicular to a plane that is circumscribed to the surface of the sinter to be broken. For instance, in the case in which a shape of the sinter sample is a rectangular parallelepiped, the sinter sample is broken in such a manner that a broken plane almost perpendicular to the surface of the sinter is formed. The broken plane is mirror polished, and is heat treated under the condition in which a grain growth of aluminum nitride does not occur. A section including the region extending up to 100 μm from the surface of the sinter for the sample broken plane that has been heat treated is observed by using a scanning electron microscope (SEM). A section that is an average construction in particular is selected from the region extending up to 100 μm from the surface of the sinter, a magnification is set in such a manner that aluminum nitride crystal grains in the range of 1000 to 2000 pieces are included in an SEM photograph to be obtained, and an SEM photograph is taken. Such five SEM photographs are prepared. The image date of the photographs is incorporated in an image analysis system, and a circumscribed circle is drawn in such a manner that the circumscribed circle is circumscribed to the grain boundary phase in the image date to obtain a diameter of the circumscribed circle.

In the SEM photographs, colors of the aluminum nitride crystal grains are gray to black, and crystal grains of the grain boundary phase have a white color. Consequently, the aluminum nitride crystal grains and the grain boundary phase crystal grains can be easily distinguished from each other.

The proportion (%) of the area of a grain boundary phase having a circumscribed circle diameter of 1 μm or

less to the total area of the grain boundary phase in a cross section of the sinter is obtained by calculating the value of the following expression from the results of the above described image analysis of SEM photographs.

```
{(total area of the grain boundary phase having a circumscribed circle diameter of 1 μm or less) / (total area of the grain boundary

phase)} x 100
```

In the case in which the proportion of the area of a grain boundary phase having a circumscribed circle diameter of 1 $\mu$m or less to the total area of the grain boundary phase is in the above range for the grain boundary phase in any cross section of the region extending up to 100 $\mu$m from the surface of the sinter, it is thought that a stress applied to the sinter can be effectively dispersed to the above grain boundary phase derived from a sintering aid, thereby improving a toughness of the sinter. On the other hand, in the case in which the proportion of the area of a grain boundary phase is not in the above range, a stress cannot be effectively dispersed in some cases since sections that aluminum nitride crystal grains directly come into contact with are increased. Moreover, in the case in which the proportion of the area of a grain boundary phase is not in the above range, the grain boundary phase derived from a sintering aid tends to cover the total of aluminum nitride crystal grains, thereby reducing strength of the entire sinter in some cases.

Among them, it is preferable that the proportion of the area of a grain boundary phase having a circumscribed circle diameter of 1 $\mu$m or less to the total area of the above grain boundary phase is at least 60%, more preferably at least 70%, in any cross section of the region extending up to 100 $\mu$m from the surface of the sinter.

In the case in which the proportion of the area of a grain boundary phase having a circumscribed circle diameter of 1 $\mu$m or less is in the above range, an aluminum nitride sinter having an improved thermal conductivity and a high fracture toughness can be obtained.

In the present invention, a structure of the grain boundary phase derived from a sintering aid outside the region extending up to 100 $\mu$m from the surface of the sinter is not restricted in particular. However, even in a cross section of a region extending to more than 100 $\mu$m from the surface of the sinter, it is preferable that the proportion of the area of a grain boundary phase having a circumscribed circle diameter of 1 $\mu$m or less to the total area of the grain boundary phase is at least 50%, more preferably at least 60%, particularly preferably at least 70%. In the case in which a grain boundary phase in any cross section of a region extending to more than 100 $\mu$m from the surface of the sinter is configured as described above, the fracture toughness and a mechanical strength of an aluminum nitride sinter can be extremely improved, thereby obtaining a sinter substrate having a higher reliability.

<Aluminum nitride crystal grain>

The aluminum nitride sinter in accordance with the present invention contains aluminum nitride crystal grains. The average grain diameter of the aluminum nitride crystal grains is in the range of 3.0 to 7.0 $\mu$m, preferably in the range of 3.0 to 6.0 $\mu$m, more preferably in the range of 3.5 to 5.0 $\mu$m.

The above described average grain diameter of the aluminum nitride crystal grains can be obtained by the following process. Similarly to the case of obtaining a diameter of a circumscribed circle of the grain boundary phase, a sinter sample obtained by the present invention is broken. The broken plane is then mirror polished, and is heat treated under the condition in which a grain growth of aluminum nitride does not occur. A section including the region extending up to 100 $\mu$m from the surface of the sinter for the sample that has been heat treated is observed by using a scanning electron microscope (SEM). A section that is an average construction in particular is selected from the region extending up to 100 $\mu$m from the surface of the sinter, a magnification is set in such a manner that aluminum nitride crystal grains in the range of 1000 to 2000 pieces are included in an SEM photograph to be obtained, and an SEM photograph is taken. Such five SEM photographs are prepared. The image date of the photographs is incorporated in an image analysis system, and a grain diameter of each aluminum nitride crystal grain in the image date is measured. A value obtained by dividing an integrated value of grain diameters by the number of grains is an average grain diameter.

In the case in which the average grain diameter of the aluminum nitride crystal grains is in the above range, an aluminum nitride sinter to be obtained has a high fracture toughness and is improved in a fracture toughness, a thermal conductivity, and a mechanical strength in a well balanced manner. In the case in which the average grain diameter of the aluminum nitride crystal grains exceeds the above range, a mechanical strength and a fracture toughness are reduced disadvantageously in some cases although a thermal conductivity is improved. In the case in which the average grain diameter of the aluminum nitride crystal grains is less than the above range, a fracture toughness is reduced disadvantageously in some cases although a mechanical strength is improved.

An aluminum nitride powder that is a material of an aluminum nitride sinter in accordance with the present invention can be used without a restriction in particular, in the only case in which the average grain diameter of the aluminum nitride crystal grains contained in the aluminum nitride sinter is in the above range. For instance, an aluminum nitride powder that is contained in an aluminum nitride slurry that will be described in the following can be used.

[Aluminum nitride slurry]

The above described aluminum nitride sinter in accordance with the present invention can be produced by using, for instance, an aluminum nitride slurry described below as a material. That is, the aluminum nitride sinter in accordance with the present invention can be produced from an aluminum nitride slurry that contains an aluminum nitride powder, a sintering aid, a binding agent, and an organic solvent having an average grain diameter in the range of 1.0 to 3.0 $\mu$m and in which a cumulative 50% value (D50) in a grain size distribution curve is in the range of 0.8 to 1.2 $\mu$m, and a ratio of a cumulative 90% value and a cumulative 10% value (D90/D10) is in the range of 6.0 to 6.8.

<Aluminum nitride powder>

An average grain diameter of an aluminum nitride powder that is used for the aluminum nitride slurry in accordance with the present invention is in the range of 1.0 to 3.0 $\mu$m. An average grain diameter of an aluminum nitride powder in accordance with the present invention means an average grain diameter that is measured by a laser diffraction type grain size distribution measuring apparatus and that is obtained by a grain number average of cohesive grains of aluminum nitride. In the case in which an average grain diameter is in the above range for an aluminum nitride powder, a solid content concentration of the aluminum nitride slurry to be obtained can be increased, a uniform dispersion can be easily carried out, and a flow property and a drying efficiency are both excellent. In addition, the aluminum nitride sinter in accordance with the present invention in which an aluminum nitride crystal grain has a predetermined structure can be easily obtained.

Among the above aluminum nitride powders, an average grain diameter of the aluminum nitride powder is preferably in the range of 1.0 to 2.5 $\mu$m, more preferably in the range of 1.0 to 2.0 $\mu$m. In the case in which an average grain diameter of the aluminum nitride powder is in the above range, a more uniform dispersion can be easily carried out, and a flow property and a drying efficiency are both excellent.

For an aluminum nitride powder that is used for the aluminum nitride slurry in accordance with the present invention, one kind of an aluminum nitride powder having an average grain diameter in the above range can be used independently. Moreover, a combined use of at least two kinds of aluminum nitride powders having different average grain diameters can also be carried out in such a manner that an average grain diameter is in the above range.

For an aluminum nitride powder that is used for the aluminum nitride slurry in accordance with the present invention, there is no restriction in particular other than that of an average grain diameter.

A producing method of an aluminum nitride powder is not restricted in particular. For instance, there can be used an aluminum nitride powder that is obtained by a reduction nitriding method, an aluminum nitride powder that is obtained by a direct nitriding method, and a mixture thereof. However, an aluminum nitride powder that is obtained by a reduction nitriding method is preferably used from a view point of that an aluminum nitride sinter that is obtained finally has an excellent thermal conductivity.

An impurity of the above aluminum nitride powder is not restricted in particular. An aluminum nitride powder that contains less impurities such as oxygen and cations is preferable. For instance, an aluminum nitride powder in which a content of oxygen is preferably 1.5 weight% or less, more preferably in the range of 0.4 to 1.3 weight%, and a content of cation impurities is preferably 0.3 weight% or less, more preferably 0.2 weight% or less, is preferable. In the case in which such an aluminum nitride powder is used as a material, an aluminum nitride sinter having an excellent thermal conductivity can be obtained.

Pure aluminum nitride is a compound in which a molar ratio of aluminum and nitrogen is 1 to 1. Consequently, a component that is contained in an aluminum nitride powder being used as a material and that is derived from an element departing from the range of the quantity ratio is handled as a cation impurity. For instance, in the case in which metal aluminum as an impurity is contained in aluminum nitride, the metal aluminum is handled as a cation impurity. However, a surface of an aluminum nitride powder is oxidized unavoidably in the air, and at least a part of an Al-N bind is substituted with an Al-O bind in some cases. Such a component that is derived from the Al-O bind is not handled as a cation impurity in an aluminum nitride powder, but handled as an oxygen component.

<Sintering aid>

As a sintering aid that is used for the aluminum nitride slurry in accordance with the present invention, a sintering aid that has been disclosed in the above description of the aluminum nitride sinter can be used. A preferable sintering aid is also similar to the above description.

An amount of the sintering aid to be used is generally in the range of 2 to 6 weight part, preferably in the range of 3 to 5 weight part, to 100 weight part of an aluminum nitride powder.

In the case in which a sintering aid of an amount in the above range is used, a fracture toughness of the sinter obtained from the aluminum nitride slurry in accordance with the present invention can be improved. In addition, the aluminum nitride sinter in accordance with the present invention in which a grain boundary phase derived from the sintering aid has a predetermined structure can be easily produced.

<Binding agent>

A binding agent that is used for the aluminum nitride slurry in accordance with the present invention is not restricted in particular. A general binding agent for forming a ceramic powder can be used.

There can be used, for instance, an organic polymer molecule containing oxygen such as polyvinyl butyral, polymethyl methacrylate, polyethyl methacrylate, poly 2-ethylhexyl methacrylate, polybutyl methacrylate, polyacrylate, cellulose acetate butyrate, cellulose nitrate, methylcellulose, hydroxymethyl cellulose, polyvinyl alcohol, polyoxyethylene oxide, and polypropylene oxide; a hydrocarbons organic polymer molecule such as a petroleum resin, polyethylene, polypropylene, and polystyrene; other organic polymer molecule such as polyvinyl chloride; wax; and a mixture of at least the above two substances.

Among those binding agents, the organic polymer molecule containing oxygen is preferable from a view point of that the organic polymer molecule has an excellent chemical affinity with an aluminum nitride powder, thereby enabling the organic polymer molecule to be strongly bound to an aluminum nitride powder.

In the case in which an organic polymer molecule is used as a binding agent, a number average molecular weight is not restricted in particular. A number average molecular weight of a polystyrene conversion is generally in the range of 3000 to 1000000, preferably in the range of 5000 to 300000. In the case in which a number average molecular weight of an organic polymer molecule is in the above range, a green object having a high strength and an excellent flexibility can be obtained in some cases.

A usage form of the binding agent is not restricted in particular. For instance, the binding agent can be used just as it is or can be used as an emulsion.

An amount of the binding agent to be used is generally in the range of 4 to 30 weight part, preferably in the range of 5 to 20 weight part, to 100 weight part of an aluminum nitride powder.

<Organic solvent>

An organic solvent that is used for the aluminum nitride slurry in accordance with the present invention is not restricted in particular, and a general organic solvent can be used.

There can be used, for instance, ketones such as acetone, methyl ethyl ketone, and methyl isopropyl ketone; alcohols such as ethanol, propanol, and butanol; aromatic hydrocarbons such as benzene, toluene, and xylene; halogenated hydrocarbons such as trichloroethylene, tetrachloroethylene, and bromochloromethane; and a mixture of the above organic solvents.

An amount of the organic solvent to be used is generally in the range of 20 to 200 weight part, preferably in the range of 40 to 150 weight part, to 100 weight part of an aluminum nitride powder.

<Other components>

For aluminum nitride in accordance with the present invention, an addition agent such as a surface active agent and a plasticizer can be used as other components.

A surface active agent to be used is not restricted in particular. However, a nonionic surface active agent is preferable.

nonionic surface active agents include, for instance, carboxylation trioxyethylene tridecyl ether, diglycerol monooleate, diglycerol monostearete, carboxylation heptaoxyethylene tridecyl ether, tetraglycerol monooleate, polyoxyethylene sorbitan monooleate, propylene glycol monostearete, glycerol monostearete, glycerol tristearate, glycerol monooleate, glycerol trioleate, sorbitan trioleate, sorbitan monooleate, and a mixture of at least the above two components.

An amount of the surface active agent to be used is generally in the range of 0.01 to 10 weight part, preferably in the range of 0.02 to 3.0 weight part, to 100 weight part of an aluminum nitride powder.

In the case in which a surface active agent of an amount in the above range is used, a dispersion of the binding agent and aluminum nitride can be made excellent, thereby improving a strength of an aluminum nitride green object that is obtained from the aluminum nitride slurry.

A plasticizer to be used is not restricted in particular. There can be mentioned, for instance, polyethylene glycol, a derivative thereof; phthalate esters such as dimethyl phthalate, dibutyl phthalate, benzyl butyl phthalate, and dioctyl phthalate; stearate esters such as butyl stearate; tricresol phosphate; tri-N-butyl phosphate; glycerin; and a mixture of at least the above two components.

An amount of the plasticizer to be used is generally in the range of 0.1 to 20 weight part, preferably in the range of 0.4 to 15 weight part, to 100 weight part of an aluminum nitride powder.

<Grain size distribution of an aluminum nitride slurry>

An aluminum nitride slurry in accordance with the present invention is a mixture of the above materials such as an aluminum nitride powder, a sintering aid, a binding agent, and an organic solvent, and has a specific grain size distribution.

For an aluminum nitride slurry in accordance with the present invention, a cumulative 50% value (D50) in a grain size distribution curve is in the range of 0.8 to 1.2 $\mu$m, and a ratio of a cumulative 90% value and a cumulative 10% value (D90/D10) is in the range of 6.0 to 6.8.

A grain size distribution of an aluminum nitride slurry in accordance with the present invention is obtained by a laser diffractometry. Grains in a grain size distribution measuring of an aluminum nitride slurry include all grains that can be measured as grains by a laser diffractometry. Not only aluminum nitride itself but also a binding agent, a sintering aid, and an addition agent, etc. are included in some cases.

The measured results are represented as a grain size distribution curve. All grains that are included in an aluminum nitride slurry and that can be measured by a laser diffractometry are accumulated from grains having a smaller diameter. A grain diameter of a grain of a cumulative 10% value is then obtained as D10, a grain diameter of a grain of a cumulative 50% value is obtained as D50, and a grain diameter of a grain of a cumulative 90% value is obtained as D90. Moreover, from those values, a ratio of a cumulative 90% value and a cumulative 10% value (D90/D10) is obtained.

In the case in which a grain size distribution of an aluminum nitride slurry in accordance with the present invention is in the above range, a viscosity can be reduced as compared with a general slurry, thereby improving a handling property of a slurry, even if a solid content concentration of the aluminum nitride slurry is high. In addition, an amount of an organic solvent that is contained in the aluminum nitride slurry is small.

Moreover, in the case in which an aluminum nitride green object in a sheet shape is produced from the aluminum nitride slurry, an occurrence of a crease, a crack, and an uneven thickness for the sheet can be reduced.

Furthermore, the aluminum nitride sinter that is obtained by using the aluminum nitride slurry as a material is excellent in a fracture toughness and a mechanical strength, and a dispersion of physical properties such as a mechanical strength can be reduced. In addition, a dimensional accuracy of a sinter to be obtained can be improved, and a camber of an end portion can be reduced. Moreover, the aluminum nitride sinter in accordance with the present invention in which a grain boundary phase derived from a sintering aid has a specific structure can be easily obtained.

A grain size distribution of the aluminum nitride slurry in accordance with the present invention is in the above range. It is preferable that D50 is in the range of 0.9 to 1.1 $\mu$m and D90/D10 is in the range of 6.2 to 6.6 $\mu$m.

In the case in which a grain size distribution of the aluminum nitride slurry is in the above range, the aluminum nitride sinter that is obtained by using the aluminum nitride slurry as a material has a higher fracture toughness.

<Producing method of an aluminum nitride slurry>

A producing method of the aluminum nitride slurry having the above grain diameter is not restricted in particular. For instance, an aluminum nitride powder, a sintering aid, a binding agent, an organic solvent and the like are dissolved and mixed by a motor mixer, a ball mill or the like, an aluminum nitride solution is obtained and is introduced to a publicly known dispersing apparatus, and solid components such as aluminum nitride and a sintering aid are dispersed in the organic solvent, thereby producing the aluminum nitride slurry. As a publicly known dispersing apparatus, there can be mentioned, for instance, an ultrasonic dispersing apparatus, a beads mill, a roll mill, a homo mixer, an ultra mixer, a dispersion mixer, a homo mixer, a through type high pressure dispersing apparatus, a colliding type high pressure dispersing apparatus, a porous type high pressure dispersing apparatus, a lump removing type high pressure dispersing apparatus, a colliding and through type high pressure dispersing apparatus, and an ultra high pressure homogenizer.

Among those dispersing apparatuses, it is preferable to carry out a high pressure dispersion processing by using a through type high pressure dispersing apparatus, a colliding type high pressure dispersing apparatus, a porous type high pressure dispersing apparatus, a lump removing type high pressure dispersing apparatus, a colliding and through type high pressure dispersing apparatus, and an ultra high pressure homogenizer, etc. from a view point of that the aluminum nitride slurry that satisfies the requirements of a grain size distribution in accordance with the present application can be easily obtained.

In the case in which grains can be dispersed by the dispersing apparatus in such a manner that the above requirements of a grain size distribution are satisfied, a shape, a size, a processing pressure, and the number of times of processing for the apparatus are not restricted in particular. For instance, in the case in which a colliding type high pressure dispersing apparatus is used, the aluminum nitride slurry that satisfies the above requirements of a grain size distribution can be produced by making a material mixture to pass through the high pressure dispersing apparatus at a pressure in the range of 100 to 200 MPa generally 1 to 9 times, preferably 1 to 3 times, more preferably 1 or 2 times.

<Aluminum nitride green object>

An aluminum nitride green object in accordance with the present invention can be produced from the above aluminum nitride slurry for instance.

An aluminum nitride green object in accordance with the present invention contains an aluminum nitride powder and a binding agent having an average grain diameter in the range of 1.0 to $3.0\mu$ m, and has a submerged density in the range of 2.25 to 2.45 g/cm$^3$. For such an aluminum nitride green object, even in the case in which the aluminum nitride green object is in a sheet shape, a camber of an end portion is small. Moreover, a mechanical strength is excellent, a fine shape and film thinning can be easily achieved. Furthermore, the aluminum nitride sinter that is obtained by using the aluminum nitride green object as a material is excellent in a fracture toughness and a mechanical strength, and a dispersion of physical properties such as a mechanical strength can be reduced. In addition, a dimensional accuracy of a sinter to be obtained can be improved, and a camber of an end portion can be reduced. Moreover, the aluminum nitride sinter in accordance with the present invention in which a grain boundary phase has a specific structure can be easily obtained.

Such an aluminum nitride green object can be produced by the following process for instance. First, for the above aluminum nitride slurry in accordance with the present invention, a filtration, a defoaming, and a desolvation are carried out as needed to adjust a viscosity of the slurry and so on. Subsequently, a molded product in a sheet shape is obtained by a method such as a doctor blade method by using a sheet molding machine. The molded product in a sheet shape is then dried, and at least a part of an organic solvent that is contained in the molded product in a sheet shape is removed, thereby obtaining the aluminum nitride green object in accordance with the present invention.

<Aluminum nitride degreased object>

An aluminum nitride degreased object in accordance with the present invention can be obtained by degreasing the above aluminum nitride green object in accordance with the present invention for instance.

For the aluminum nitride degreased object in accordance with the present invention, the maximum peak point of a pore distribution measured by a mercury porosimeter is in the range of 0.18 to 0.28 $\mu$m. In the case in which a pore of the aluminum nitride degreased object is in the above range, the aluminum nitride sinter that is obtained from the aluminum nitride degreased object is excellent in a fracture toughness and a mechanical strength, and a dispersion of physical properties such as a mechanical strength can be reduced. In addition, a dimensional accuracy of a sinter to be obtained can be improved, and a camber of an end portion can be reduced. Moreover, the aluminum nitride sinter in accordance with the present invention in which a grain boundary phase has a specific structure can be easily obtained.

A degreasing process is generally carried out in the atmosphere of an oxidizing gas such as oxygen and an air, a reducing gas such as hydrogen, an inert gas such as argon and nitrogen, carbon dioxide, or a mixture gas thereof, or in the moistening gas atmosphere in which the above gas and steam are mixed. A degreasing temperature can be properly selected depending on a kind of a binding agent and a degreasing atmosphere. In general, a degreasing temperature is selected from the range of 300 to 1200°C, preferably the range of 400 to 1000°C. Moreover, a degreasing time can be properly selected depending on a kind of a binding agent and a degreasing atmosphere. In general, a degreasing time is selected from the range of 30 minutes to 10 hours, preferably the range of 2 to 8 hours. It is preferable to adjust a degreasing atmosphere, a temperature, and a degreasing time to make an oxygen concentration of the degreased object to be 3.0 weight% or less, preferably in the range of 0.9 to 2.5 weight% from a view point of that an aluminum nitride sinter that is obtained by the present invention can have an excellent thermal conductivity.

<Sintering of an aluminum nitride sinter>

An aluminum nitride sinter in accordance with the present invention can be obtained by sintering the above aluminum nitride degreased object.

The above sintering of an aluminum nitride sinter is generally carried out in the atmosphere of a non-oxidizing gas, in a vacuum, or in a pressure reduction. As a non-oxidizing gas, a reducing gas such as hydrogen, an inert gas such as argon, helium, and nitrogen, or a mixture gas thereof is used for instance. In general, a sintering temperature is in the range of 1650 to 1900°C, preferably the range of 1750 to 1800°C, more preferably the range of 1760 to 1790°C.

In the case in which a sintering temperature is in the above range, a sinter to be obtained can be precise, and a grain growth of crystal can be in the suitable range.

In addition to the above conditions, the aluminum nitride sinter in accordance with the present invention can be easily obtained by heating the aluminum nitride degreased object at a temperature higher than an optimum preciseness temperature by the range of 10 to 40°C in the non-oxidizing atmosphere.

The above optimum preciseness temperature is a sintering temperature by which the sinter in which a relative density to a theoretical density is at least 99% can be obtained.

The sinter that has been obtained under such sintering conditions has a high fracture toughness and is improved in a fracture toughness, a thermal conductivity, and a mechanical strength in a well balanced manner. Moreover, a dispersion of a mechanical strength can be reduced. In addition, a dimensional accuracy of the sinter to be obtained can be improved, and a camber of an end portion can be reduced.

A sintering time is not restricted in particular, and is generally in the range of 2 to 20 hours, preferably the range of 5 to 15 hours. In the case in which a sintering time is in the above range, a sinter to be obtained can be precise, and a grain growth of crystal can be in the suitable range. Moreover, the sinter to be obtained can be improved in a fracture toughness, a thermal conductivity, and a mechanical strength in a well balanced manner.

In the case in which the above sintering is carried out, a sintering container that is used for a sintering of aluminum nitride in general can be used without a problem. For instance, a closed container made of aluminum nitride or silicon nitride can be used.

An aluminum nitride sinter in accordance with the present invention can be used itself as a structural material for an electronic component or the like. Moreover, the aluminum nitride sinter in accordance with the present invention can also be used as a metal junction board for a power module or the like and a circuit board having a metalized face of a fine pattern or the like.

As a metal of the above metal junction board, copper, aluminum, and so on can be used suitably. A thickness of a metal layer for the metal junction board is generally in the range of 0.1 to 1 mm. For the metal layer, the above metal is bonded to a surface of the aluminum nitride sinter by an active metal wax material method or other publicly known methods.

[Embodiments]

While the embodiments and comparative examples will be described in the following to disclose the present invention in more detail, the present invention is not restricted to the embodiments and comparative examples.

For the following embodiments and comparative examples, physical properties of many kinds were measured by the following methods.

(1) Grain size distribution of an aluminum nitride powder and an aluminum nitride slurry

A grain size distribution of an aluminum nitride powder and an aluminum nitride slurry was measured by a laser diffractometry using MICROTRAC II manufactured by LEED & NORTHRP. A grain size distribution of an aluminum nitride powder that was used as a material was measured by dispersing aluminum nitride in water. A grain size distribution of an aluminum nitride slurry was measured by dispersing an aluminum nitride slurry in ethanol.

(2) Submerged density of an aluminum nitride green object

A submerged density of an aluminum nitride green object was obtained by the Archimedes method using a high precision gravimeter D-H manufactured by TOYO SEIKI CO., LTD.

(3) Pore diameter of an aluminum nitride degreased object

A pore distribution of an aluminum nitride degreased object was measured by using the Pore Master 60 (mercury porosimeter) manufactured by Quantachrome Co., Ltd. A contact angle $\theta$ of 140° and a surface tension $\sigma$ of mercury of 480 ergs/cm$^2$ were adopted for a relational expression of Washburn. Since a pressure was increased up to 60000 PSIA, a measured range of a pore diameter was 35 angstrom to approximately 100000 angstrom.

(3) Density of a sinter

A density of a sinter was obtained by the Archimedes method using a high precision gravimeter D-H manufactured by TOYO SEIKI CO., LTD.

(4) Fracture toughness

Vickers hardness was measured by using a Vickers hardness test machine AVK-CO manufactured by Akashi Co. , Ltd. in conformance with JIS R1607. A fracture toughness was calculated from the Vickers hardness by an I. F. method. A push load was 49 N, and a retention time was 15 seconds. An average value of five samples was the measured value.

(5) Mechanical strength

A three point flexural strength was measured at a crosshead speed of 0.5 mm/min and at a span of 30 mm while conforming to JIS R1601. A width of a test piece fabricated by a surface grinding was 4 mm. An average value of five samples was the measured value.

(6) Thermal conductivity

A thermal conductivity was measured by a laser flash method using a thermal constant measuring apparatus PS-7 manufactured by Rigaku Denki Co., Ltd. A thickness correction was carried out by using a calibration curve.

(7) Diameter of a circumscribed circle and an area of the grain boundary phase for an aluminum nitride sinter

A diameter of a circumscribed circle of each grain boundary phase was obtained by the following method using an image analysis system (IP-1000PC manufactured by Asahi Kasei Corporation) from the SEM photographs of a microstructure of the sinter.
The obtained sinter sample in a shape of a rectangular parallelepiped was broken in a direction almost perpendicular to the surface of the sinter. The broken plane including the region extending up to 100 $\mu$m from the outer surface of the sinter was mirror polished, and was heat treated at a temperature in the range of 1600 to 1650°C in which a grain growth of aluminum nitride does not occur. The observation surface was etched by the treatment, thereby obtaining a surface in which an aluminum nitride crystal grain and a grain boundary phase derived from a sintering aid can be distinguished from each other.
A sample cross section including the region extending up to 100 $\mu$m from the surface of the sinter was observed by using a scanning electron microscope (SEM) (S-2150 model manufactured by Hitachi, Ltd.). A magnification was set in such a manner that crystal grains in the range of 200 to 300 pieces were included in an observation screen. The observation with the above set magnification was carried out at a plurality of sections, and a photograph was taken. A photograph includes crystal grains in the range of 1000 to 2000 pieces. Such five SEM photographs were prepared while changing a camera station. In a monochrome photograph of a microstructure of the sinter, a color of a phase of an aluminum nitride crystal grain was gray, and a color of a grain boundary phase derived from a sintering aid was white. Consequently, the aluminum nitride crystal grain and the grain boundary phase can be easily distinguished from each other.
The obtained SEM photograph of a microstructure of the sinter was analyzed by using the above image analysis system. A diameter of a circumscribed circle of the grain boundary phase, the total area of the grain boundary phase, and an area of a grain boundary phase having a circumscribed circle diameter of 1 $\mu$m or less were then obtained in the region extending up to 100 $\mu$m from the surface of the sinter.
As described above, the proportion (%) of the area of a grain boundary phase having a circumscribed circle diameter of 1 $\mu$m or less to the total area of the grain boundary phase was obtained by calculating the value of the following expression.

```
{(total area of the grain boundary phase having a circumscribed circle diameter of 1 µm or less) / (total area of the grain boundary

phase)} x 100
```

(8) (9?) Average grain diameter of the aluminum nitride crystal grains in an aluminum nitride sinter

An average grain diameter of the aluminum nitride crystal grains in an aluminum nitride sinter was calculated simultaneously with the image analysis of the above described (7).

More specifically, the maximum grain diameter of a grain identified with the aluminum nitride crystal grain was obtained from the image analysis, and the value of the following expression was calculated.

```
(Integrated value of the maximum grain diameter of the aluminum

nitride crystal grain) / (Number of aluminum nitride crystal grains)
```

(9) (10?) Measuring method of a residue rate of a sintering aid

An aluminum nitride sinter was ground in a powder shape, and was neutralized by acid after an alkali fusion. A metallic element concentration of a sintering aid was determined by the ICP luminescence analysis of the solution using ICP-1000 manufactured by SHIMADZU CORPORATION, and was converted to an amount of a sintering aid in the aluminum nitride sinter. A residue rate of the sintering aid was then obtained from a sintering aid compounding ratio in an adjustment of an aluminum nitride slurry.

[Embodiment 1]

A ball made of alumina having a Vickers hardness of 1200 and a diameter of 10 mm was put in a pot made of nylon with an internal volume of 10 L at an apparent filling rate of 40%. Subsequently, an aluminum nitride powder having an average grain diameter of 1.5 $\mu$m (H grade manufactured by Tokuyama Corporation) of 100 weight part, yttrium oxide of 5 weight part, sorbitan trioleate of 2 weight part, toluene of 21 weight part, ethanol of 12 weight part, and butanol of 2 weight part were added in order to carry out a first level ball mill mixing for 16 hours. Polyvinyl butyral of 8 weight part, dibutyl phthalate of 3.5 weight part, toluene of 27 weight part, ethanol of 16 weight part, and butanol of 2 weight part were then added to the mixture. After that, a second level ball mill mixing was carried out for 18 hours, thereby obtaining an aluminum nitride solution.

A high pressure dispersion processing of one time was carried out to the obtained aluminum nitride solution at a pressure of 200 MPa by a colliding type high pressure dispersing apparatus (HJP-25005 manufactured by Sugino Machine Limited) to obtain an aluminum nitride slurry. In a grain size distribution curve of the obtained aluminum nitride slurry, D50 was 1.0 $\mu$m, and D90/D10 was 6.2.

Subsequently, a desolvation was carried out to the obtained aluminum nitride slurry to adjust a viscosity to be 20000 cP. A sheet molding was then carried out by a doctor blade method to fabricate an aluminum nitride green sheet having a width of 20 cm and a thickness of 0.75 mm. The aluminum nitride green sheet was punched by a press working machine to obtain an aluminum nitride green object having a width of 68 mm, a length of 68 mm, and a thickness of 0.75 mm. A submerged density of the obtained aluminum nitride green object was 2.35 g/cm$^3$.

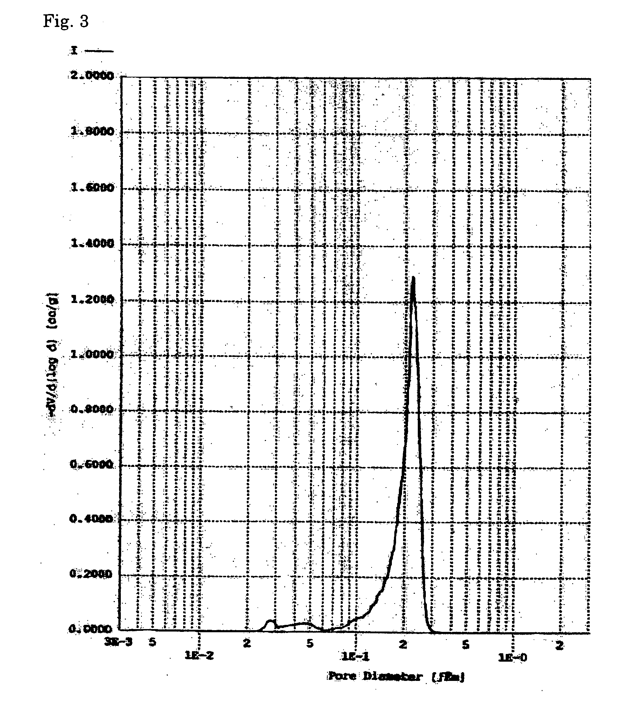

The green object that was obtained by the above process was degreased at a temperature of 580°C in a dry air for 4 hours to obtain an aluminum nitride degreased object having an oxygen concentration of 2.1 weight%. A pore distribution of the obtained aluminum nitride degreased object was then measured by a mercury porosimeter. The maximum peak point of the pore distribution was 0.22 $\mu$m. Fig. 3 shows a pore distribution that was measured by a mercury porosimeter.

Subsequently, the aluminum nitride degreased object was put in a sintering container to sinter the aluminum nitride degreased object at a temperature of 1780°C (optimum preciseness temperature + 30°C) in a nitrogen atmosphere for 5 hours to obtain an aluminum nitride sinter. A density, a thermal conductivity, a mechanical strength, a fracture toughness, an average grain diameter of an aluminum nitride crystal grain, and a proportion (%) of the area of a grain boundary phase having a circumscribed circle diameter of 1 $\mu$m or less to the total area of the grain boundary phase were then measured for the obtained aluminum nitride sinter. In addition, a residue rate of a sintering aid was also obtained. The results are listed in Table 1.

[Embodiment 2]

An aluminum nitride sinter was obtained similarly to Embodiment 1 except that the aluminum nitride degreased object was sintered at a temperature of 1780°C in a nitrogen atmosphere for 10 hours in Embodiment 1. The sinter was then also evaluated. The evaluation results are shown in Table 1.

[Embodiment 3]

A high pressure dispersion processing was carried out twice to the aluminum nitride solution obtained in Embodiment 1 at a pressure of 200 MPa by a colliding type high pressure dispersing apparatus (HJP-25005 manufactured by Sugino Machine Limited) to obtain an aluminum nitride slurry. In a grain size distribution curve of the obtained aluminum nitride slurry, D50 was 1.0 $\mu$m, and D90/D10 was 6.6.

Subsequently, a desolvation was carried out to the obtained aluminum nitride slurry to adjust a viscosity to be 20000 cP. A sheet molding was then carried out by a doctor blade method to fabricate an aluminum nitride green sheet having a width of 20 cm and a thickness of 0.75 mm. The aluminum nitride green sheet was punched by a press working machine to obtain an aluminum nitride green object having a width of 68 mm, a length of 68 mm, and a thickness of 0.75 mm. A submerged density of the obtained aluminum nitride green object was 2.37 g/cm$^3$.

The green object that was obtained by the above process was degreased at a temperature of 580°C in a dry air for 4 hours to obtain an aluminum nitride degreased object having an oxygen concentration of 2.1 weight%. A pore distribution of the obtained aluminum nitride degreased object was then measured by a mercury porosimeter. The maximum peak point of the pore distribution was 0.20 $\mu$m.

Subsequently, an aluminum nitride sinter was obtained similarly to Embodiment 1, and was also evaluated. The evaluation results are shown in Table 1.

[Embodiment 4]

A high pressure dispersion processing was carried out five times to the aluminum nitride solution obtained in Embodiment 1 at a pressure of 200 MPa by a colliding type high pressure dispersing apparatus (HJP-25005 manufactured by Sugino Machine Limited) to obtain an aluminum nitride slurry. In a grain size distribution curve of the obtained aluminum nitride slurry, D50 was 0.8 $\mu$m, and D90/D10 was 6.6.

Subsequently, a desolvation was carried out to the obtained aluminum nitride slurry to adjust a viscosity to be 20000 cP. A sheet molding was then carried out by a doctor blade method to fabricate an aluminum nitride green sheet having a width of 20 cm and a thickness of 0.75 mm. The aluminum nitride green sheet was punched by a press working machine to obtain an aluminum nitride green object having a width of 68 mm, a length of 68 mm, and a thickness of 0.75 mm. A submerged density of the obtained aluminum nitride green object was 2.43 g/cm$^3$.

The green object that was obtained by the above process was degreased at a temperature of 580°C in a dry air for 4 hours to obtain an aluminum nitride degreased object having an oxygen concentration of 2.1 weight%. A pore distribution of the obtained aluminum nitride degreased object was then measured by a mercury porosimeter. The maximum peak point of the pore distribution was 0.19 $\mu$m.

Subsequently, an aluminum nitride sinter was obtained similarly to Embodiment 1, and was also evaluated. The evaluation results are shown in Table 1.

[Embodiment 5]

An aluminum nitride solution was obtained similarly to Embodiment 1 except that a first level ball mill mixing was carried out for 2 hours and a second level ball mill mixing was then carried out for 4 hours in Embodiment 1. A high pressure dispersion processing of one time was carried out to the obtained aluminum nitride solution at a pressure of 200 MPa by a colliding type high pressure dispersing apparatus (HJP-25005 manufactured by Sugino Machine Limited) to obtain an aluminum nitride slurry. In a grain size distribution curve of the obtained aluminum nitride slurry, D50 was 1.0 $\mu$m, and D90/D10 was 6.2.

Subsequently, a desolvation was carried out to the obtained aluminum nitride slurry to adjust a viscosity to be 20000 cP. A sheet molding was then carried out by a doctor blade method to fabricate an aluminum nitride green sheet having a width of 20 cm and a thickness of 0.75 mm. The aluminum nitride green sheet was punched by a press working machine to obtain an aluminum nitride green object having a width of 68 mm, a length of 68 mm, and a thickness of 0.75 mm. A submerged density of the obtained aluminum nitride green object was 2.32 g/cm$^3$.

The green object that was obtained by the above process was degreased at a temperature of 580°C in a dry air for 4 hours to obtain an aluminum nitride degreased object having an oxygen concentration of 2.0 weight%. A pore distribution of the obtained aluminum nitride degreased object was then measured by a mercury porosimeter. The maximum peak point of the pore distribution was 0.24 $\mu$m.

Subsequently, an aluminum nitride sinter was obtained similarly to Embodiment 1, and was also evaluated. The evaluation results are shown in Table 1.

[Embodiment 6]

An aluminum nitride slurry was obtained similarly to Embodiment 5 except that a high pressure dispersion processing of one time was carried out to the obtained aluminum nitride solution at a pressure of 100 MPa in Embodiment 5. In a grain size distribution curve of the obtained aluminum nitride slurry, D50 was 1.2 $\mu$m, and D90/D10 was 6.4.

Subsequently, a desolvation was carried out to the obtained aluminum nitride slurry to adjust a viscosity to be 20000 cP. A sheet molding was then carried out by a doctor blade method to fabricate an aluminum nitride green sheet having a width of 20 cm and a thickness of 0.75 mm. The aluminum nitride green sheet was punched by a press working machine to obtain an aluminum nitride green object having a width of 68 mm, a length of 68 mm, and a thickness of 0.75 mm. A submerged density of the obtained aluminum nitride green object was 2.27 g/cm³.

The green object that was obtained by the above process was degreased at a temperature of 580°C in a dry air for 4 hours to obtain an aluminum nitride degreased object having an oxygen concentration of 2.0 weight%. A pore distribution of the obtained aluminum nitride degreased object was then measured by a mercury porosimeter. The maximum peak point of the pore distribution was 0.26 µm.

Subsequently, an aluminum nitride sinter was obtained similarly to Embodiment 1, and was also evaluated. The evaluation results are shown in Table 1.

[Comparative example 1]

An aluminum nitride solution was obtained similarly to Embodiment 1. In a grain size distribution curve of the obtained aluminum nitride solution, D50 was 1.3 µm, and D90/D10 was 7.1.

Subsequently, a desolvation was carried out to the obtained aluminum nitride solution to adjust a viscosity to be 20000 cP. A sheet molding was then carried out by a doctor blade method to fabricate an aluminum nitride green sheet having a width of 20 cm and a thickness of 0.75 mm. The aluminum nitride green sheet was punched by a press working machine to obtain an aluminum nitride green object having a width of 68 mm, a length of 68 mm, and a thickness of 0.75 mm. A submerged density of the obtained aluminum nitride green object was 2.22 g/cm³.

The green object that was obtained by the above process was degreased at a temperature of 580°C in a dry air for 4 hours to obtain an aluminum nitride degreased object having an oxygen concentration of 2.1 weight%. A pore distribution of the obtained aluminum nitride degreased object was then measured by a mercury porosimeter. The maximum peak point of the pore distribution was 0.29 µm.

Subsequently, an aluminum nitride sinter was obtained similarly to Embodiment 1, and was also evaluated. The evaluation results are shown in Table 1.

[Comparative example 2]

A high pressure dispersion processing was carried out ten times to the aluminum nitride solution obtained in Embodiment 1 at a pressure of 200 MPa by a colliding type high pressure dispersing apparatus (HJP-25005 manufactured by Sugino Machine Limited) to obtain an aluminum nitride slurry. In a grain size distribution curve of the obtained aluminum nitride slurry, D50 was 0.7 µm, and D90/D10 was 6.9.

Subsequently, a desolvation was carried out to the obtained aluminum nitride slurry to adjust a viscosity to be 20000 cP. A sheet molding was then carried out by a doctor blade method to fabricate an aluminum nitride green sheet having a width of 20 cm and a thickness of 0.75 mm. The aluminum nitride green sheet was punched by a press working machine to obtain an aluminum nitride green object having a width of 68 mm, a length of 68 mm, and a thickness of 0.75 mm. A submerged density of the obtained aluminum nitride green object was 2.46 g/cm³.

The green object that was obtained by the above process was degreased at a temperature of 580°C in a dry air for 4 hours to obtain an aluminum nitride degreased object having an oxygen concentration of 2.1 weight%. A pore distribution of the obtained aluminum nitride degreased object was then measured by a mercury porosimeter. The maximum peak point of the pore distribution was 0.17 µm.

Subsequently, an aluminum nitride sinter was obtained similarly to Embodiment 1, and was also evaluated. The evaluation results are shown in Table 1.

[Table 1]

| | Density of a sinter (g/cm³) | Thermal conductivity (W/m · K) | Flexural strength (MPa) | Fracture toughness (MPa · m$^{1/2}$) | Average grain diameter of A/N crystal grains (µm) | Proportion of a grain boundary phase of 1 µm or less (%) | Residue rate of a sintering aid (%) |
|---|---|---|---|---|---|---|---|
| Embodiment 1 | 3.34 | 181 | 520 | 3.2 | 4.9 | 86 | 70 |

(continued)

|  | Density of a sinter (g/cm$^3$) | Thermal conductivity (W/m · K) | Flexural strength (MPa) | Fracture toughness (MPa · m$^{1/2}$) | Average grain diameter of A/N crystal grains ($\mu$m) | Proportion of a grain boundary phase of 1 $\mu$m or less (%) | Residue rate of a sintering aid (%) |
|---|---|---|---|---|---|---|---|
| Embodiment 2 | 3.34 | 178 | 530 | 3.6 | 4.3 | 92 | 55 |
| Embodiment 3 | 3.34 | 177 | 510 | 3.4 | 4.0 | 89 | 70 |
| Embodiment 4 | 3.34 | 180 | 500 | 3.0 | 3.4 | 57 | 72 |
| Embodiment 5 | 3.33 | 178 | 530 | 3.1 | 4.6 | 75 | 70 |
| Embodiment 6 | 3.33 | 181 | 520 | 3.1 | 4.8 | 64 | 71 |
| Comparative example 1 | 3.33 | 178 | 490 | 2.2 | 4.4 | 30 | 75 |
| Comparative example 2 | 3.34 | 180 | 440 | 2.2 | 3.6 | 38 | 74 |

**Claims**

1. The aluminum nitride sinter comprising:

   aluminum nitride crystal grains; and
   a grain boundary phase derived from a sintering aid;

   wherein, in any cross section in a region extending up to 100 $\mu$m from the surface of the sinter, the proportion of the area of a grain boundary phase having a circumscribed circle diameter of 1 $\mu$m or less to the total area of the grain boundary phase is at least 50%, and the average grain diameter of the aluminum nitride crystal grains is in the range of 3.0 to 7.0 $\mu$m.

2. An aluminum nitride slurry being used for the manufacture of the aluminum nitride sinter as defined in claim 1, comprising:

   an aluminum nitride powder, a sintering aid, a binding agent, and an organic solvent having an average grain diameter in the range of 1.0 to 3.0 $\mu$m;

   wherein a cumulative 50% value (D50) in a grain size distribution curve is in the range of 0.8 to 1.2 $\mu$m, and a ratio of a cumulative 90% value and a cumulative 10% value (D90/D10) is in the range of 6.0 to 6.8.

3. An aluminum nitride green object being used for the manufacture of the aluminum nitride sinter as defined in claim 1, comprising:

   an aluminum nitride powder and a binding agent having an average grain diameter in the range of 1.0 to 3.0 $\mu$m;

   wherein a submerged density is in the range of 2.25 to 2.45 g/cm$^3$.

4. An aluminum nitride degreased object being used for the manufacture of the aluminum nitride sinter as defined in claim 1, wherein the maximum peak point of a pore distribution measured by a mercury porosimeter is in the range of 0.18 to 0.28 $\mu$m.

Fig. 1

100 μm

100 μm

Fig. 2

100 μm

Fig. 3

<div align="center">

**INTERNATIONAL SEARCH REPORT**

</div>

| | International application No. |
|---|---|
| | PCT/JP2006/312051 |

| A. CLASSIFICATION OF SUBJECT MATTER |
|---|
| *C04B35/626*(2006.01), *C04B35/581*(2006.01) |

According to International Patent Classification (IPC) or to both national classification and IPC

| B. FIELDS SEARCHED |
|---|
| Minimum documentation searched (classification system followed by classification symbols) |
| *C04B35/626-35/638*(2006.01), *C04B35/581*(2006.01) |

Documentation searched other than minimum documentation to the extent that such documents are included in the fields searched

|  |  |  |  |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)
CA(STN)

| C. DOCUMENTS CONSIDERED TO BE RELEVANT | | |
|---|---|---|
| Category* | Citation of document, with indication, where appropriate, of the relevant passages | Relevant to claim No. |
| X<br>A | JP 5-024930 A  (Showa Denko Kabushiki Kaisha),<br>02 February, 1993 (02.02.93),<br>Claim 1; Par. Nos. [0009], [0017]; tables 1, 2<br>(Family: none) | 1<br>2-4 |
| X<br>A | JP 2002-220283 A  (Denki Kagaku Kogyo Kabushiki Kaisha),<br>09 August, 2002 (09.08.02),<br>Par. Nos. [0032] to [0035]; tables 1 to 3<br>(Family: none) | 1,4<br>2,3 |

☐ Further documents are listed in the continuation of Box C.  ☐ See patent family annex.

| | |
|---|---|
| *    Special categories of cited documents: | "T"   later document published after the international filing date or priority date and not in conflict with the application but cited to understand the principle or theory underlying the invention |
| "A"   document defining the general state of the art which is not considered   to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 04 July, 2006 (04.07.06) | 18 July, 2006 (18.07.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**EP 1 914 214 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001002474 A
- JP 2002220283 A
- JP 10203873 A